# EUROPEAN PATENT APPLICATION

(11) **EP 4 502 682 A1**
(43) Date of publication of application: **05.02.2025**
(21) Application number: 23774822.3
(22) Date of filing: 17.03.2023
(51) Int. Cl.: G02B 6/02, G02B 6/036

(54) **MULTICORE OPTICAL FIBER**

(30) Priority: 24.03.2022 JP 2022048368
(71) Applicant: SUMITOMO ELECTRIC INDUSTRIES, LTD., Osaka-shi, Osaka 541-0041 (JP)
(72) Inventor: HASEGAWA Takemi, Osaka-shi, Osaka 541-0041 (JP); SUGANUMA Takahiro, Osaka-shi, Osaka 541-0041 (JP); SAKUMA Hirotaka, Osaka-shi, Osaka 541-0041 (JP)
(74) Representative: TBK
(86) International application number: PCT/JP2023/010691
(87) International publication number: WO 2023/182227

(57) **Abstract**

A multicore optical fiber (MCF) according to one embodiment of the present invention enables stable core identification. The MCF comprises a glass optical fiber and a resin coating. The glass optical fiber includes a plurality of cores, a marker, and cladding. The arrangement of the centers of the cores and the center of the marker in a cross-section of the MCF does not have rotational symmetry with respect to the center of the cross-section. The cladding includes an inner clad that surrounds the cores and the marker, and an outer clad that is provided on the outer peripheral surface of the inner clad and has a refractive index higher than that of the inner clad.

## Description

### TECHNICAL FIELD

The present disclosure relates to a multicore optical fiber (hereinafter, referred to as "MCF"). This application claims priority based on Japanese Patent Application No. 2022-048368 filed on March 24, 2022, and the entire contents of the Japanese patent application are incorporated herein by reference.

### BACKGROUND ART

For example, as described in patent literature 1, in an MCF, a marker having a refractive index different from a refractive index of a cladding is introduced into the cladding. It is known that each of a plurality of cores can be identified in a cross-section of the MCF cut at any position along a longitudinal direction. The marker in the cladding is arranged at a position at which distances to the plurality of cores are not uniform. In the case of the marker having the refractive index higher than the refractive index of the cladding, the marker has a diameter smaller than a diameter of the core or the refractive index lower than a refractive index of the core. This reduces coupling between a mode propagating in the core and a mode propagating in the marker, and reduces noise mixing with a signal light propagating in the core.

When each of the plurality of cores is identified by observing an end face of the MCF cut at any position along the longitudinal direction, end face observation by illumination from side surface is performed. In this end face observation, a side surface of the MCF near the cutting position is irradiated with illumination light. When the illumination light propagates in the MCF, the illumination light is confined in a high refractive index region and propagates with low propagation loss, whereas the illumination light propagates with high propagation loss while leaking out in a low refractive index region. Thus, the high refractive index region is displayed brighter and the low refractive index region is displayed darker in an end face image of the MCF. By identifying the core and the marker based on the end face image displaying light and dark areas, it is possible to identify each of the plurality of cores.

### CITATION LIST

### PATENT LITERATURES

Patent literature 1: Japanese Unexamined Patent Application Publication No. 2011-170099

### SUMMARY OF INVENTION

An MCF according to the present disclosure includes a glass optical fiber and a resin coating. The glass optical fiber has a plurality of cores each extending along a central axis (hereinafter, referred to as a "fiber axis"), a marker extending along the plurality of cores, and a cladding surrounding the plurality of cores and the marker. The resin coating is provided over an outer peripheral surface of the glass optical fiber. In particular, on a cross-section of the MCF perpendicular to the fiber axis, centers of the plurality of cores and a center of the marker are arranged so as to have no rotational symmetry with respect to a center of the cross-section. Further, the cladding includes an inner cladding and an outer cladding. The inner cladding surrounds the plurality of cores and the marker in a state of being in contact with the plurality of cores and the marker. The outer cladding is provided over an outer peripheral surface of the inner cladding and has a refractive index higher than a refractive index of the inner cladding.

### BRIEF DESCRIPTION OF DRAWINGS

FIG. 1 is a diagram showing an example of a structure of an MCF and an example of an observation apparatus of an MCF end face according to the present disclosure.
FIG. 2 is a diagram showing a cross-sectional structure of an MCF according to the present disclosure.
FIG. 3 is a diagram for explaining an example of a cross-sectional structure of each of an MCF according to the present disclosure and an MCF according to a comparative example.

### DETAILED DESCRIPTION

### [Problems to be Solved by Present Disclosure]

The inventors have studied the above-described conventional technique and have found the following problems. That is, in the above-described conventional technique, when performing the end face observation of the MCF by the illumination from side surface, the brightness of the marker and the core in the end face changes depending on which side surface of the fiber the illumination light enters, and core identification may become difficult.

The present disclosure has been made to solve the above-described problem, and an object of the present disclosure is to provide an MCF having a structure for enabling stable core identification.

### [Advantageous Effects of Present Disclosure]

According to an MCF of the present disclosure, core identification can be stably performed.

### [Description of Embodiments of Present Disclosure]

First, the contents of embodiments of the present disclosure will be described by listing them individually.
(1) An MCF of the present disclosure includes a glass optical fiber and a resin coating. The glass optical fiber has a plurality of cores each extending along a fiber axis, a marker extending along the plurality of cores, and a cladding surrounding the plurality of cores and the marker. The resin coating is provided over an outer peripheral surface of the glass optical fiber. In particular, on a cross-section of the MCF perpendicular to the fiber axis, an arrangement of centers of the plurality of cores and a center of the marker has no rotational symmetry because it forms a plane figure of 1-fold rotational symmetry with respect to a center of the cross-section. Further, the cladding includes an inner cladding and an outer cladding. The inner cladding surrounds the plurality of cores and the marker in a state of being in contact with the plurality of cores and the marker. The outer cladding is provided over an outer peripheral surface of the inner cladding and has a refractive index higher than a refractive index of the inner cladding. The fiber axis corresponds to a central axis of the MCF. The outer peripheral surface of the glass optical fiber corresponds to an outer peripheral surface of the cladding. A center of the cross-section corresponds to a position where the cross-section and the fiber axis intersect.
   As described above, the MCF of the present disclosure has a configuration such that the outer cladding, which has a refractive index higher than that of the inner cladding, surrounds the inner cladding in which the plurality of cores and the marker are arranged. In this configuration, even when one side of the MCF is irradiated with illumination light (hereinafter referred to as "observation light") for observing a fiber end face, a part of the observation light propagates in the outer cladding. In this way, the observation light that has traveled not only to the side irradiated with the observation light but also to an opposite side of the inner cladding easily enters the inner cladding, and thus, an end face image in which the brightness of the inner cladding is made uniform as a whole is obtained. In other words, brightness variation of the marker and the cores depending on incident directions of the observation light is effectively reduced, and the core identification can be stably performed.
(2) In the above (1), on the cross-section of the MCF, when a diameter of the outer cladding is 2A and a diameter of the inner cladding is 2B, a ratio B/A of a radius B of the inner cladding to a radius A of the outer cladding may be 1/3 to 2/3. When the ratio B/A is smaller than 1/3, the outer cladding becomes too thick, and thus arrangement flexibility of the plurality of cores and the marker in the inner cladding is limited. On the other hand, when the ratio B/A is larger than 2/3, the outer cladding becomes too thin, and thus a sufficient amount of the observation light cannot propagate to the backside of the MCF which is not irradiated with the observation light.
(3) In the above (1) or (2), an absolute value of a relative refractive index difference of the inner cladding with reference to the refractive index of the outer cladding is preferably 0.02% to 0.3%. In this case, since a part of the observation light is appropriately confined in the outer cladding, a part of observation light can propagate in the outer cladding while being partially coupled to a mode in the inner cladding.
(4) In any one of the above (1) to (3), the centers of the plurality of cores may be arranged so as to have rotational symmetry with respect to the center of the cross-section.

Each of the aspects listed in the "Description of Embodiments of Present Disclosure" section above is applicable to each of the remaining aspects or to all combinations of these remaining aspects.

### [Details of Embodiments of Present Disclosure]

Hereinafter, a specific structure of an MCF of the present disclosure will be described in detail with reference to the accompanying drawings. The present disclosure is not limited to these examples, but is defined by the scope of the claims, and is intended to include all modifications within the meaning and scope equivalent to the scope of the claims. In the description of the drawings, the same elements are denoted by the same reference numerals, and redundant description thereof will be omitted.

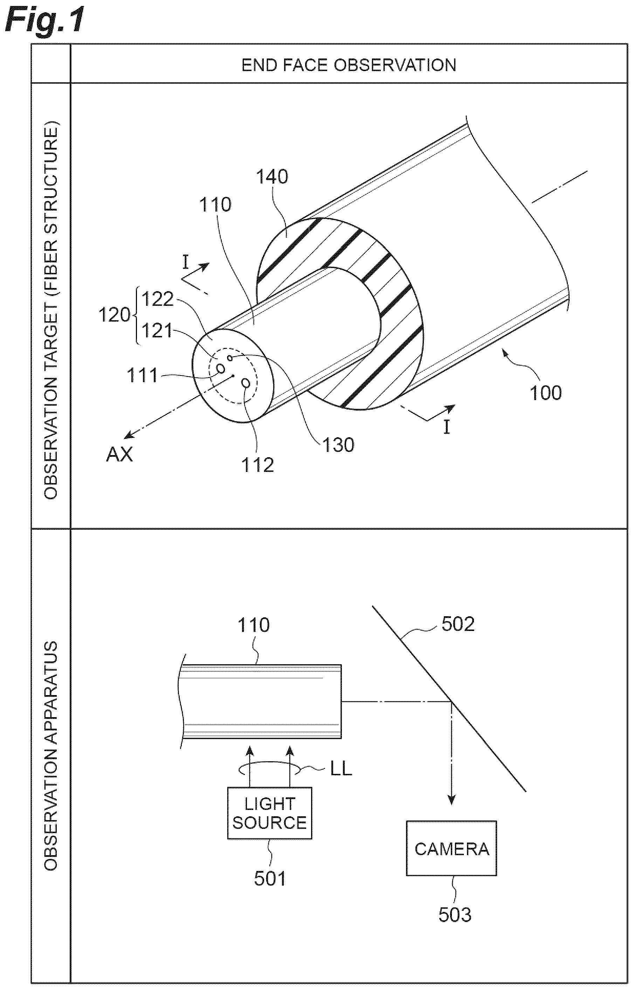

FIG. 1 is a diagram showing an example of a structure of an MCF and an example of an observation apparatus of an MCF end face according to the present disclosure (in FIG. 1, referred to as "end face observation"). An upper part of FIG. 1 (in FIG. 1, referred to as "observation target (fiber structure)") shows an example of a representative structure of an MCF 100 according to the present disclosure. A lower part of FIG. 1 (in FIG. 1, referred to as "observation apparatus") shows a schematic structure of the observation apparatus for performing the end face observation of the MCF according to the present disclosure.

MCF 100, which is the observation target shown in the upper part of FIG. 1, includes a glass optical fiber 110 and a resin coating 140 provided over an outer peripheral surface of glass optical fiber 110. Glass optical fiber 110 has two cores 111, 112, a cladding 120, and a marker 130. Three or more cores may be applied to MCF 100. Two cores 111, 112 extend along a fiber axis AX which is a central axis of MCF 100. Marker 130 extends along two cores 111, 112. Cladding 120 surrounds two cores 111, 112 and marker 130. Marker 130 has a refractive index different from a refractive index of cladding 120. Cladding 120 includes an inner cladding 121 surrounding two cores 111, 112 and marker 130, and an outer cladding 122 provided over an outer peripheral surface of inner cladding 121 and having a refractive index higher than a refractive index of inner cladding 121. When performing the end face observation by illumination from side surface, a part of resin coating 140 covering a tip portion of glass optical fiber 110 including the end face is removed as shown in the upper part of FIG. 1.

The end face observation of MCF 100 having the above-described structure is performed by the observation apparatus shown in the lower part of FIG. 1. That is, the observation apparatus includes a light source 501, a mirror element 502, and a camera 503 as an end face imaging camera. In the end face observation of MCF 100, first, a side surface of the tip portion of glass optical fiber 110 including the end face is irradiated with an observation light LL from light source 501. Observation light LL incident in glass optical fiber 110 is emitted from the end face of glass optical fiber 110 toward mirror element 502 and is reflected by mirror element 502. Further, observation light LL reflected by mirror element 502 reaches an imaging surface of camera 503. When observation light LL propagates in glass optical fiber 110, observation light LL is confined in the high refractive index region such as two cores 111, 112 and propagates with a low propagation loss, whereas observation light LL propagates with a high propagation loss while leaking to the outside in the low refractive index region such as cladding 120. Thus, by providing a sufficient propagation distance, the high refractive index region is displayed brighter and the low refractive index region is displayed darker in an end face image of glass optical fiber 110. However, since intrusion from the outside as well as leakage to the outside is likely to occur in the low refractive index region, when the propagation distance is sufficiently short, the high refractive index region may be displayed darker and the low refractive index region may be displayed brighter in the end face image of glass optical fiber 110. Two cores 111, 112 and marker 130 are identified based on the end face image displaying light and dark areas, and thus it is possible to identify each of two cores 111, 112.

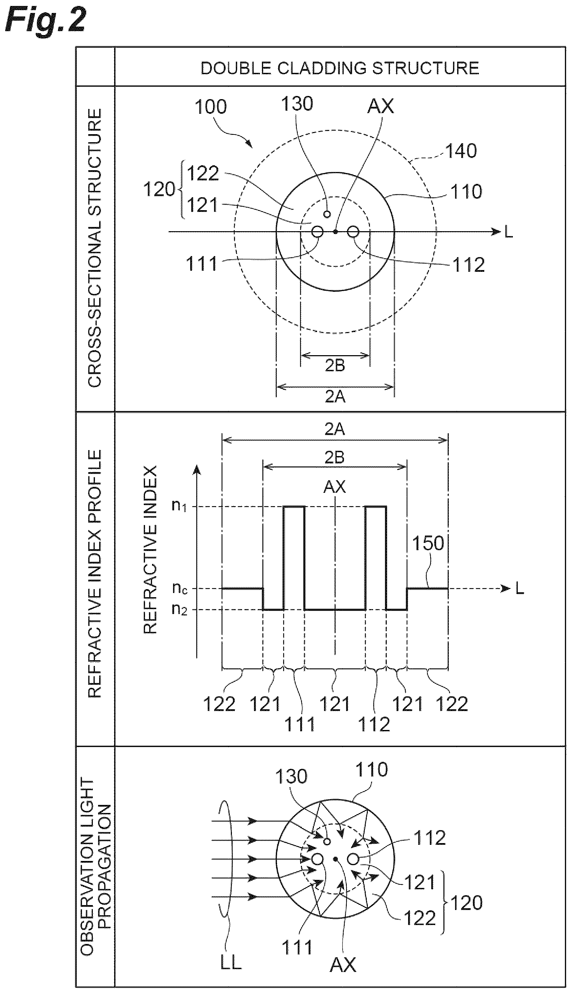

FIG. 2 is a diagram showing a cross-sectional structure of the MCF according to the present disclosure (in FIG. 2, referred to as "double cladding structure"). An upper part of FIG. 2 (referred to as "cross-sectional structure" in FIG. 2) shows a cross-sectional structure of MCF 100 according to the present disclosure along the line I-I shown in the upper part of FIG. 1. A middle part of FIG. 2 (referred to as "refractive index profile" in FIG. 2) shows a refractive index profile 150 indicating the refractive index of each position along a line L shown in the upper part of FIG. 2. A lower part of FIG. 2 (referred to as "observation light propagation" in FIG. 2) shows a diagram for explaining a propagation state of observation light in glass optical fiber 110 from which resin coating 140 is removed in MCF 100. A fiber cross-section shown in the lower part of FIG. 2 is a cross-section of glass optical fiber 110 from which resin coating 140 is removed in MCF 100, and corresponds to a part of the fiber cross-section along the I-I line shown in the upper part of FIG. 1.

As shown in the upper part of FIG. 2, glass optical fiber 110 of MCF 100 includes cladding 120, and cladding 120 has a double cladding structure constituted by inner cladding 121 having a diameter 2B and outer cladding 122 having a diameter 2A. In inner cladding 121 having diameter 2B, two cores 111, 112 and marker 130 are arranged along the longitudinal direction of MCF 100. The arrangement of the centers of two cores 111, 112 and the center of marker 130 has no rotational symmetry because it forms a plane figure of 1-fold rotational symmetry with respect to a center of the cross-section. That is, an element arrangement including only two cores 111, 112 has rotational symmetry because it forms a plane figure of 2-fold rotational symmetry, but the element arrangement further including marker 130 loses rotational symmetry.

MCF 100 includes refractive index profile 150 as shown in the middle part of FIG. 2. That is, two cores 111, 112 are positioned across fiber axis AX, and each has a refractive index n1. Inner cladding 121 has a refractive index n2 that is lower than refractive index n1 of two cores 111, 112. Outer cladding 122 has a refractive index nc that is lower than the refractive index n1 of two cores 111, 112 and higher than the refractive index n2 of inner cladding 121. In this specification, the "refractive index of cladding 120" means the refractive index nc of outer cladding 122. A refractive index of marker 130 need only be different from the refractive index n2 of inner cladding 121. For example, the refractive index of marker 130 may have a relative refractive index difference of 0.25% or more with respect to the refractive index n2 of inner cladding 121. This allows for a reliable identification. For example, marker 130 may have the refractive index higher than the refractive index n2, and a product of the relative refractive index difference and a marker radius may be 1.0 [%·µm] or less. This reduces loss caused by coupling of a mode propagating through the core to a mode in the marker.

Each of cores 111, 112 of MCF 100 has at least one mode for guiding light of a wavelength of 1550 nm that is a typical communication wavelength. A guided mode of one core has sufficiently low inter-core crosstalk with a guided mode of another core. For example, any inter-core crosstalk should be -60 dB/km or less. In this case, noise due to crosstalk can be reduced to a negligible level. For example, between any cores, crosstalk between signal lights propagating in opposite directions may be -60 dB/km, or crosstalk between signal lights propagating in the same direction may be -60 dB/km. In this case, noise due to crosstalk can be reduced to a negligible level by appropriately selecting the propagation direction. In order to reduce crosstalk to the above-described level at the wavelength of 1550 nm, the center-to-center distance between adjacent cores may be 30 µm or more. The center-to-center distance between adjacent cores may be 50 µm or less. Thus, even when outer cladding 122 is made sufficiently thick, leakage loss due to mode coupling from cores 111, 112 to outer cladding 122 is reduced. Furthermore, an effective refractive index of the guided mode may differ by 0.01% or more between adjacent cores. Thus, even when the center-to-center distance between adjacent cores is short, crosstalk can be suppressed. A core diameter may be 8 µm to 15 µm, and a relative refractive index difference between cores 111, 112 and inner cladding 121 may be 0.3% to 0.5%. This makes it possible to reduce crosstalk and noise due to higher order modes.

Observation light LL, shown in the lower part of FIG. 1, emitted from light source 501 and reached to a side surface of glass optical fiber 110 enters glass optical fiber 110, and then, as shown in the lower part of FIG. 2, a part of observation light LL propagates in outer cladding 122. That is, observation light LL propagates in outer cladding 122 while leaking into inner cladding 121, and reaches to the backside of glass optical fiber 110 irradiated with observation light LL. As described above, observation light LL incident in glass optical fiber 110 is partially reflected at an interface between inner cladding 121 and outer cladding 122, and the partially reflected observation light LL is multiply reflected in outer cladding 122. As a result, observation light LL is coupled to cores 111, 112 and marker 130 while being uniformly dispersed and/or uniformly diffused in outer cladding 122, and thus light amount of observation light LL coupled to cores 111, 112 and marker 130 is stabilized regardless of an incident direction of observation light LL.

As for an appropriate thickness of outer cladding 122, when a diameter of outer cladding 122 is 2A and a diameter of inner cladding 121 is 2B, a ratio B/A which is a ratio of a radius B of inner cladding 121 to a radius A of outer cladding 122 is preferably 1/3 to 2/3. When the ratio B/A is smaller than 1/3, outer cladding 122 becomes too thick, and thus arrangement flexibility of cores 111, 112 and marker 130 in inner cladding 121 is limited. On the other hand, when the ratio B/A is larger than 2/3, outer cladding 122 becomes too thin, and thus a sufficient light amount of observation light LL cannot propagate to the backside of glass optical fiber 110 which is not irradiated with observation light LL.

Further, an absolute value of a relative refractive index difference of inner cladding 121 with reference to the refractive index nc of outer cladding 122 is preferably 0.02% to 0.3%. In this case, since a part of observation light LL is appropriately confined in outer cladding 122, the part of observation light LL can propagate in outer cladding 122 while being partially coupled to a mode in inner cladding 121.

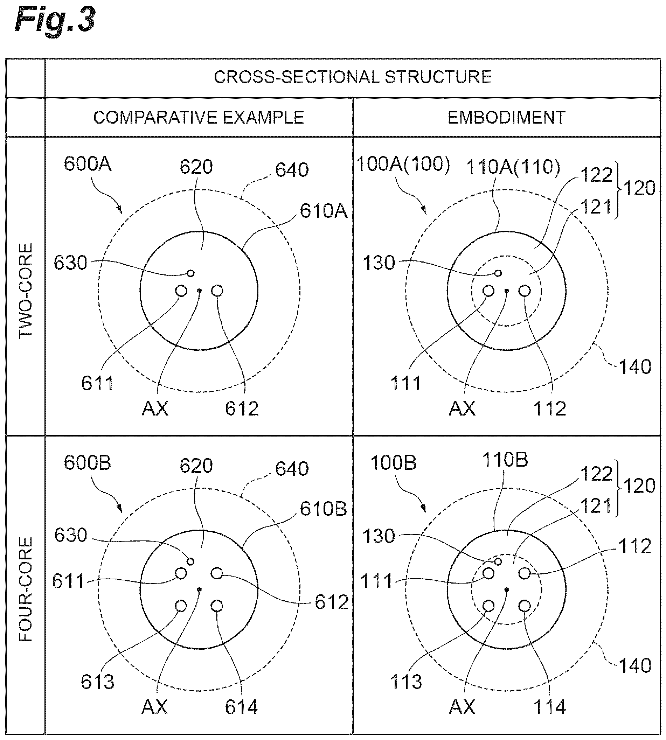

FIG. 3 is a diagram for explaining an example of the cross-sectional structure of each of the MCF according to the present disclosure and the MCF according to a comparative example (in FIG. 3, referred to as "cross-sectional structure"). An upper part of FIG. 3 (referred to as "two-core" in FIG. 3) shows the cross-sectional structures of an MCF 600A according to the comparative example and an MCF 100A (100) according to the embodiment. A lower part of FIG. 3 (referred to as "four-core" in FIG. 3) shows the cross-sectional structures of an MCF 600B according to the comparative example and an MCF 100B according to the embodiment. Each of the fiber cross-sections shown in FIG. 3 corresponds to a part of the fiber cross-section along the line I-I shown in the upper part of FIG. 1.

MCF 600A according to the comparative example shown in the upper part of FIG. 3 is a two-core MCF. MCF 600A includes a glass optical fiber 610A and a resin coating 640. Glass optical fiber 610A has two cores 611, 612 extending along fiber axis AX, a cladding 620, and a marker 630. In MCF 600A according to the comparative example, cladding 620 in glass optical fiber 610A has a single structure. MCF 600B according to the comparative example shown in the lower part of FIG. 3 is a four-core MCF. MCF 600B includes a glass optical fiber 610B and resin coating 640. Glass optical fiber 610B has four cores 611, 612, 613, and 614 extending along fiber axis AX, cladding 620, and marker 630. In MCF 600B according to this comparative example, cladding 620 in glass optical fiber 610B has a single structure, as in MCF 600A.

On the other hand, MCF 100A according to the embodiment shown in the upper part of FIG. 3 corresponds to MCF 100 shown in the upper part of FIG. 1 and the upper part of FIG. 2, and is a two-core MCF. MCF 100A includes a glass optical fiber 110A corresponding to glass optical fiber 110 shown in the upper part of FIG. 1 and the upper part of FIG. 2, and resin coating 140. Glass optical fiber 110A has two cores 111, 112 extending along fiber axis AX, cladding 120, and marker 130. In MCF 100A, cladding 120 of glass optical fiber 110A has a double cladding structure including inner cladding 121 surrounding two cores 111, 112 and marker 130, and outer cladding 122 provided over the outer peripheral surface of inner cladding 121 and having a refractive index higher than inner cladding 121. MCF 100B according to the embodiment shown in the lower part of FIG. 3 is a four-core MCF. MCF 100B includes a glass optical fiber 110B and resin coating 140. Glass optical fiber 110B has four cores 111, 112, 113, and 114 extending along fiber axis AX, cladding 120, and marker 130. As in MCF 100A, cladding 120 in glass optical fiber 110B has a double cladding structure in MCF 100B.

Both of MCF 600A and 600B according to the comparative example have cladding 620 of a single structure. Thus, when the end face observation of the MCF is performed by the illumination from side surface, the brightness of two cores 611, 612 and marker 630 in the cross-section is also changed by the incident direction of observation light LL, and core identification may be difficult. Such a problem may also occur in the comparative example having four cores 611,612, 613, and 614. On the other hand, according to MCF 100A, 100B of the embodiment, observation light LL enters glass optical fiber 110A, 110B, propagates in outer cladding 122 while leaking into inner cladding 121, and reaches the opposite side of glass optical fiber 110A, 110B. As a result, observation light LL is uniformly dispersed and/or uniformly diffused in outer cladding 122 and then coupled to two cores 111, 112 and marker 130, and thus the light amount of observation light LL coupled to two cores 111, 112 and marker 130 is stabilized regardless of the incident direction of observation light LL. Such an effect can be obtained in the embodiment having four cores 111, 112, 113, and 114.

### Reference Signs List

100, 100A, 100B ... MCF
110, 110A, 110B ... Glass optical fiber
111, 112, 113, 114 ... Core
120 ... Cladding
121 ... Inner cladding
122 ... Outer cladding
130 ... Marker
140 ... Resin coating
150 ... Refractive index profile
501 ... Light source
502 ... Mirror element
503 ... Camera
AX ... Fiber axis
L ... Line
LL ... Observation light

## Claims

1. A multicore optical fiber comprising:
a glass optical fiber including a plurality of cores each extending along a central axis, a marker extending along the plurality of cores, and a cladding surrounding the plurality of cores and the marker; and
a resin coating provided over an outer peripheral surface of the glass optical fiber;
wherein, on a cross-section of the multicore optical fiber, the cross-section being perpendicular to the central axis, centers of the plurality of cores and a center of the marker are arranged so as to have no rotational symmetry with respect to a center of the cross-section, and
wherein the cladding includes an inner cladding surrounding the plurality of cores and the marker and an outer cladding provided over an outer peripheral surface of the inner cladding, the outer cladding having a refractive index higher than a refractive index of the inner cladding.

2. The multicore optical fiber according to claim 1,
wherein, on the cross-section of the multicore optical fiber, a ratio B/A of a radius B of the inner cladding to a radius A of the outer cladding is 1/3 to 2/3.

3. The multicore optical fiber according to claim 1 or claim 2,
wherein an absolute value of a relative refractive index difference of the inner cladding with reference to the refractive index of the outer cladding is 0.02% to 0.3%.

4. The multicore optical fiber according to any one of claim 1 to claim 3,
wherein the centers of the plurality of cores are arranged so as to have rotational symmetry with respect to the center of the cross-section.
